# EUROPÄISCHE PATENTSCHRIFT

(11) **EP 0 897 076 B1**
(45) Veröffentlichungstag und Bekanntmachung des Hinweises auf die Patenterteilung: **02.01.2002**
(21) Anmeldenummer: 98810705.8
(22) Anmeldetag: 22.07.1998
(51) Int. Cl.: F16K 7/12, F16K 7/16, F16K 31/122, F16K 27/02

(54) **Membranventil**
Membrane valve
Vanne à membrane

(30) Priorität: 14.08.1997 CH 191597
(43) Veröffentlichungstag der Anmeldung: 17.02.1999
(73) Patentinhaber: Georg Fischer Rohrleitungssysteme AG, 8201 Schaffhausen (CH)
(72) Erfinder: Heininger, Martin, 8200 Schaffhausen (CH); Bannwarth, Walter, 79787 Lauchringen (DE)
(74) Vertreter: Weiss, Wolfgang, Dr.

(56) Entgegenhaltungen:
- DE-A- 3 000 510
- FR-A- 2 219 353
- FR-A- 2 356 859
- GB-A- 1 534 878
- LU-A- 56 751
- US-A- 3 174 717
- US-A- 3 631 882

## Beschreibung

Die Erfindung betrifft ein pneumatisch oder hydraulisch angetriebenes Membranventil mit einem über eine Druckspindel betätigbaren Druckstück, einer mit dem Druckstück zusammenwirkenden Membran, und einem am Druckstück anliegenden Menbranhalter.

Die heutigen handelsüblichen Membranen werden in zwei Gruppen eingeteilt, und zwar in Elastomer-Membranen, welche mittels eines Gewindeanschlusses an der Druckspindel bzw. Druckstück befestigt werden, und in Polytetrafluorethylen (PTFE)-Membranen, mit Stützmembranen aus einem Elastomer, welche mittels Bajonett-Anschluss befestigt werden. Beim Bajonett-Anschluss (bekannt durch die Oberbegriffsmäßige DE-A1-30 00 510) wird vermieden, dass die Schliesskraft von der Druckspindel über den Membranstift eingeleitet wird, wobei ein axialer Verschiebeweg zwischen Druckstück oder Druckspindel und Membrane eingebaut ist. Ein unzulässig hoher Druck auf den Membranstift kann zur Beschädigung der Membrane und des Strömungskörpers führen.

Aus der US-A-3631882 ist ein manuell angetriebenes Membranventil bekannt. Eine Membrane, die aus einer mit dem Medium in Kontakt stehenden PTFE-Schicht und aus einer Druckschicht aus Gummi zusammengesetzt ist, weist im zentralen Bereich eine ringförmige Erhebung aus Gummi und einen Gewindeeinsatz aus Metall auf. Die Spindel weist am unteren Ende quer zur Spindelachse verlaufende Kupplungsstifte auf, die eine beweglich gelagerte Verbindung zwischen der Spindel und einem Druckstück aus Metall herstellen. In der zentralen Bohrung des Druckstückes wird ein als Mutter ausgebildetes Kupplungsstück mit einem Kopf auf einer Schulterauflage des Druckstückes aufgelegt. Durch die Verschraubung des Kupplungsstückes an dem Gewindeeinsatz wird das Druckstück aus Metall mit der Membranzusammensetzung verbunden.
Bei Membranventilen der eingangs erwähnten Art lässt sich das Druckstück nicht ohne Zerlegung des Antriebs ausbauen. Eine nachträgliche Auswechslung einer Membrangruppe durch eine andere ist demzufolge mit erheblichem Aufwand verbunden.

Bei pneumatisch angetriebenen Membranventilen ist das korrekte Positionieren der Luftanschlüsse für das Bedienen des Ventils von wesentlicher Bedeutung. Der Nachteil bekannter Ventilbauarten liegt darin, dass sie keine zuverlässige Positionierung der im Oberteil integrierten Luftanschlüsse ermöglichen und sich die Gehäuseteile als Folge einer fehlenden Gewindevorspannung unbeabsichtigt lösen können.

Der Erfindung liegt daher die Aufgabe zugrunde, ein Membranventil der eingangs genannten Art zu schaffen, bei dem die Membran auch nachträglich ohne Zerlegung des Ventilantriebs auf einfache Weise umgestellt bzw. zusammengebaut werden kann, zum Beispiel wahlweise nach Kundenwunsch auf EPDM- oder PTFE-Membrane.

Eine weitere Aufgabe der Erfindung ist die Bereitstellung eines Ventilgehäuses, welches eine genaue Positionierung der Luftanschlüsse bei gleichzeitig definierter Gewindevorspannung ermöglicht.

Bezüglich der vereinfachten Membrankupplung wird die erfindungsgemäss gestellte Aufgabe durch die Massnahmen im Kennzeichen des Anspruchs 1 gelöst.

Eine besonders bevorzugte Nut/Feder-Verbindung ist durch eine stirnseitig an der Druckspindel angeordnete Feder in der Form eines Ringrandes und eine den Ringrand teilweise aufnehmende, ringförmige Nut am Membranhalter gebildet. Vorzugsweise ist auch der Ringrand durch eine am stirnseitigen Ende der Druckspindel radial umlaufende Nut gebildet.

Zweckmässigerweise ist eine am Membranhalter vorgesehene Ausnehmung so ausgestaltet, dass die zur Kupplung der Druckspindel mit dem Membranhalter erforderliche Nut/Feder-Verbindung auch bei im Druckstück eingelegtem Membranhalter herstellbar ist.

Bei einem Membranventil mit einem Gehäuseoberteil, einem Zwischenstück und einem als Strömungskörper ausgestalteten Gehäuseunterteil, bei dem das Gehäuseoberteil mit dem Zwischenstück über ein Gewinde verschraubt ist, wird eine genaue Positionierung der Luftanschlüsse sowie eine definierte Vorspannung im Gewinde dadurch erreicht, dass das Gehäuseoberteil und das Zwischenstück umlaufende, im verschraubten Zustand aneinander anliegende Anschlagflächen mit teilweise voneinander verschiedenen Steigungen aufweisen und die Schraubbewegung durch einen durch die Anschlagflächen gebildeten, stufenförmigen Endanschlag begrenzt ist. Bevorzugt ist hierbei jede der Anschlagflächen paarweise ausgebildet und unter Bildung von je zwei Endanschlägen gegeneinander um 180° versetzt angeordnet.

Bei einer besonders bevorzugten Ausführungsform weist eine der Anschlagflächen, vorzugsweise die Anschlagfläche des Zwischenstücks, zwei Teilbereiche mit voneinander unterschiedlichen Steigungen auf, wobei der zweite Teilbereich zur Erzeugung einer genau definierten Gewindevorspannung eine gegenüber dem ersten Teilbereich geringere Steigung, vorzugsweise eine Steigung mit dem Wert Null, aufweist. Hierbei hat sich gezeigt, dass eine ausreichende Vorspannung erreicht werden kann, wenn sich der erste Teilbereich der Anschlagfläche über etwa 135° und der zweite Teilbereich über etwa 45° erstreckt.

Die besondere Ausgestaltung des Ventilgehäuses mit den definierten Anschlagflächen ist eine vorteilhafte Weiterbildung des erfindungsgemässen Membranventils mit der kuppelbaren Membran. Sie kann jedoch auch bei anderen Membrananordnungen ohne erfindungsgemässe Kupplung angewendet werden.

Membranventil-Antriebe werden in drei Funktionsgruppen gebaut, nämlich
- FC (fail close) Federkraft schliessend
- FO (fail open) Federkraft öffnend
- DA (double acting) doppelt wirkend

Bei allen drei Funktionsweisen erfolgt die Schliessbewegung durch eine Kraft, die über die Druckspindel auf die Membran wirkt. Die Kraftverteilung der Druckspindel auf die Membran erfolgt über das Druckstück. Die erforderliche Kraft wird je nach Konstruktionsart durch Federn bzw. Druckluft erzeugt.

Die erfindungsgemässe Anordnung lässt sich bei allen drei Funktionsweisen eines Membranventil-Antriebs einsetzen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen schematisch in
- Fig. 1 einen Querschnitt durch ein Membranventil;
- Fig. 2 eine Draufsicht auf einen Membranhalter;
- Fig. 3 einen Schnitt durch den Membranhalter von Fig. 2 entlang deren Linie I-I;

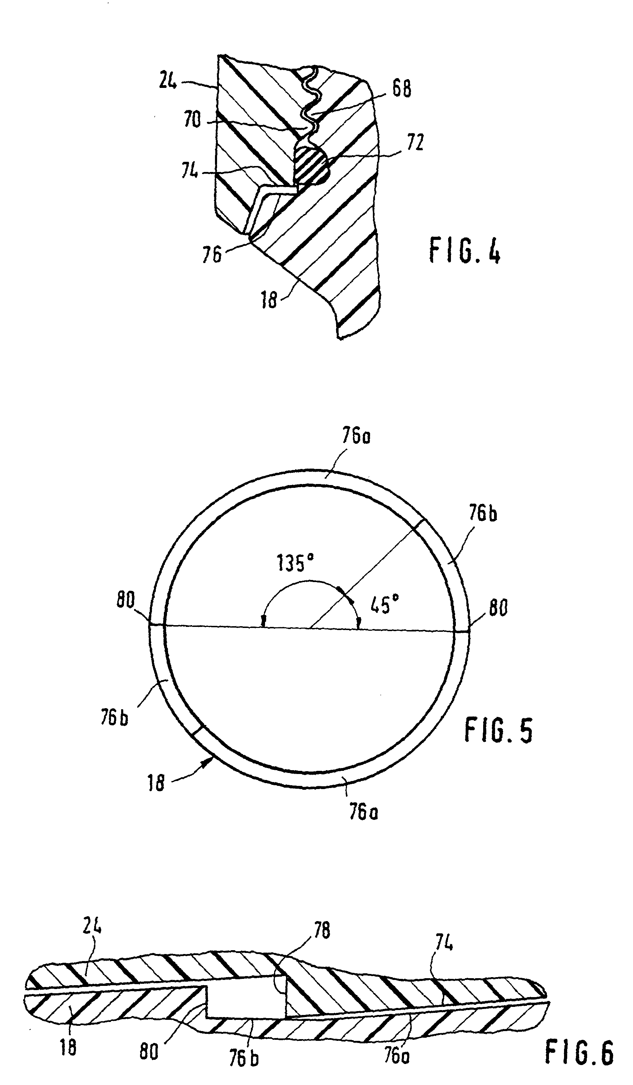

- Fig. 4 einen vergrösserten Ausschnitt aus Fig. 1 in deren Bereich A;
- Fig. 5 eine Draufsicht auf die Anschlagfläche des Zwischenstücks von Fig. 1; und
- Fig. 6 eine Seitenansicht der Anschlagflächen des Gehäuseoberteils und des Zwischenstücks von Fig. 1 bei beginnender Gewindeverspannung.

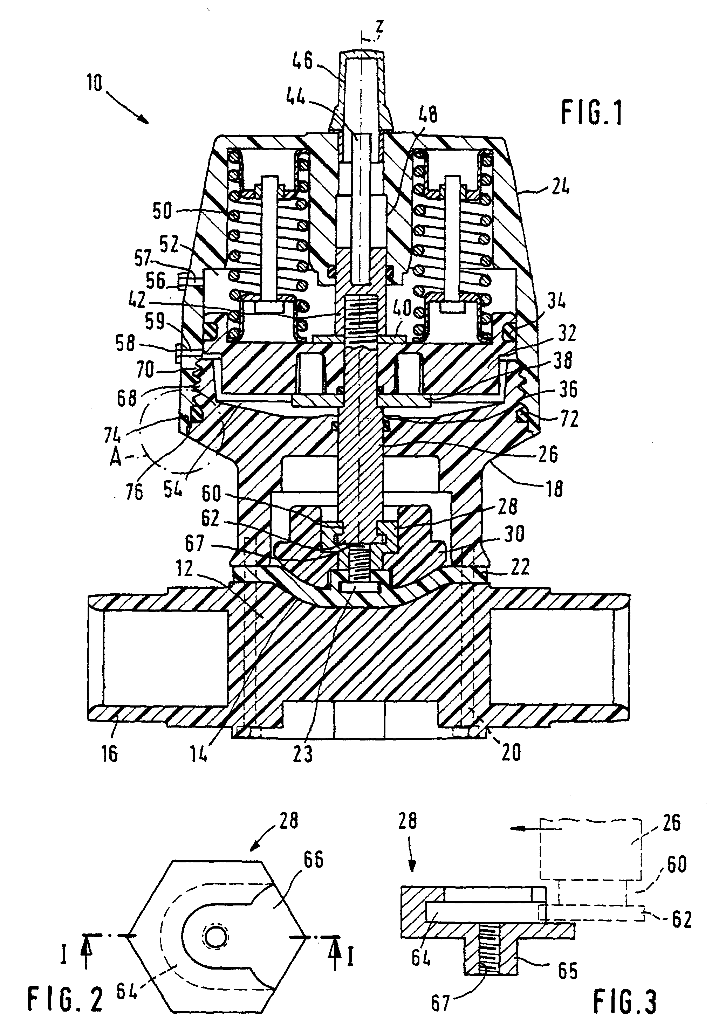

Ein in Fig. 1 dargestelltes Membranventil 10 weist ein als Strömungskörper ausgestaltetes Gehäuseunterteil 12 mit integriertem Ventilsitz 14 sowie Anschlussstutzen 16 für den Einbau in ein nicht näher dargestelltes Rohrleitungssystem auf. Das Gehäuseunterteil 12 ist über Schrauben 20 direkt mit einem Zwischenstück 18 verschraubt. Eine Elastomer-Membran 22 ist zwischen dem Gehäuseunterteil 12 und dem Zwischenstück 18 eingespannt. Ein auf das Zwischenstück 18 aufgeschraubtes Gehäuseoberteil 24 bildet den oberen Abschluss des Ventilgehäuses.

Eine Druckspindel 26 ist über einen als Kupplungsstück ausgestalteten Membranhalter 28 mit der Membran 22 lösbar verbunden. Der Membranhalter 28 sitzt formschlüssig in einem Druckstück 30 und ist mit der Membran 22 verschraubt. Hierbei greift ein in der Membran 22 verankerter Gewindeanschluss 23 in ein in Achsrichtung z der Druckspindel 26 angeordnetes Innengewinde 67 des Membranhalters 28 ein. Das Druckstück 30 ist damit durch den in dieses eingelegten Membranhalter 28 und die von der Gegenseite her verschraubte Membran 22 in seiner Arbeitsposition gehalten.

Der Hubantrieb des Membranventils 10, d.h. die Steuerbewegung der Druckspindel 26 in ihrer Achsrichtung z, erfolgt pneumatisch durch die Verschiebung eines an der Druckspindel 26 festgelegten Kolbens 32, der an der Innenwand des Gehäuseoberteils 24 über einen am Umfang des Kolbens 32 eingelegten Dichtungsring 34 abgedichtet ist.

Zur Positionierung des Kolbens 32 an der Druckspindel 26 ist diese unter Bildung einer Stufe 36 in ihrem Durchmesser verjüngt. Auf der Stufe 36 sitzt eine erste Unterlagscheibe 38, auf welcher der Kolben 32 aufliegt. Der den Kolben 32 durchsetzende, verjüngte Teil der Druckspindel 26 ist unter Zwischenordnung einer zweiten Unterlagscheibe 40 mit einer Spindelmutter 42 verschraubt, so dass der Kolben 32 auf der Druckspindel 26 festsitzt. Mit der Spindelmutter 42 ist in Achsrichtung z der Druckspindel 26 ein Anzeigestift 44 verschraubt, der bei geöffnetem Ventil aus dem Gehäuseoberteil 24 herausragt. Die Spindelmutter 42 ist in einer im Gehäuseoberteil 24 integral angeformten Führungsbüchse 48 gleitend geführt. Die gegen die Aussenseite des Gehäuseoberteils 24 offene Führungsbüchse 48 ist mit einer Sichtglocke 46 zur zeitweiligen Aufnahme des Anzeigestiftes 44 abgedeckt.

Zwischen dem Gehäuseoberteil 24 und dem Kolben 32 eingespannte Spiralfedern 50 erzeugen eine auf den Kolben 32 in Richtung der Membrane 22 wirkende Kraft, die bei der hier gezeigten Ausführungsform eines Membranventils 10 bei fehlender Gegenkraft die Membran 22 über die Druckspindel 26 und das Druckstück 30 auf den Ventilsitz 14 drückt und damit das Ventil geschlossen hält. Wie Fig. 1 zeigt, eignet sich das hier dargestellte Membranventil 10 für den Einsatz vorgespannter Federpakete, die nach dem Verschrauben des Gehäuseoberteils 24 mit dem Zwischenstück 18 auf einfache Weise entspannt werden können, d.h. die Federkraft kommt erst bei der Montage des Strömungskörpers zur Wirkung.

Am Gehäuseoberteil 24 sind obere und untere Luftanschlussstutzen 56, 58 vorgesehen, die über Bohrungen 57, 59 mit einem oberen bzw. unteren Zylinderraum 52, 54, die durch den Kolben 32 gegeneinander abgegrenzt sind, in Verbindung stehen. Je nach Wahl der Betriebsart des Membranventils werden die Luftanschlussstutzen 56, 58 zur Ventilsteuerung mit Druckluft beaufschlagt.

Wie in Fig. 2 und 3 dargestellt ist, hat der als Kupplungsstück ausgestaltete und in das Druckstück 30 formschlüssig eingesetzte Membranhalter 28 eine im wesentlichen sechseckige Gestalt. Am Membranhalter 28 ist ein Zapfen 65 mit einem Innengewinde 67 für den Gewindeanschluss 23 der Membran 22 angeformt. Senkrecht zur Achse des Innengewindes 67, die bei zusammengebauten Membranventil 10 auf der Achse z der Druckspindel 26 liegt, ist eine Nut 64 in den Membranhalter 28 eingefräst. Diese ringförmig angelegte Nut 64 im Membranhalter ist als Kupplungselement für die Aufnahme einer am stirnseitigen Ende der Druckspindel 26 durch eine radial umlaufende Nut 60 gebildete Feder in der Form eines Ringrandes 62 vorgesehen.

Zur Kupplung der Druckspindel 26 mit dem Membranhalter 28 ist eine Ausnehmung 66 im Membranhalter so vorgesehen, dass das freie Ende der Druckspindel 26 zur Bildung der Nut/Feder-Verbindung seitlich in die Nut 64 eingesetzt werden kann. Die Ausnehmung 66 ist so erweitert, dass eine Kupplung der Druckspindel 26 mit dem Membranhalter 28 in jeder Z-Lage der Druckspindel 26 möglich ist. Das anschliessende "überstülpen" des Druckstückes 30 verriegelt die radiale Verschiebung des Membranhalters 28.

Der Membranhalter 28 ist vorzugsweise aus Automatenstahl gefertigt. Je nach Anforderungen wie Chemikalienbeständigkeit, Vorschriften und dgl. lässt sich dieses Teil aus Messing oder aus nicht rostendem Stahl herstellen. Da die Druckspindel 26 zur Kupplung mit dem Membranhalter 28 nur die umlaufende Nut 64 aufweisen muss, lässt sich auch die Druckspindel kostengünstig auf einem Drehautomaten herstellen.

Da die Abmessungen des Membranhalters 28 verhältnismässig gross gewählt werden können, kann wegen der daraus resultierenden geringen Flächenpressung das Druckstück 30 aus Kunststoff gefertigt sein. Das Druckstück benötigt keinen Metalleinsatz, und die Druckspindel 26 kann durch die Metall/Metall-Verbindung mit dem Membranhalter 28 kleiner gestaltet werden.

Der in der Ausführungsform gemäss Fig. 1 bis 3 gezeigte Membranhalter 28 ist zur Aufnahme von Membranen 22 mit Gewindeanschluss 23 vorgesehen. Selbstverständlich kann jedoch der Zapfen 65 am Membranhalter 28 auch zur Befestigung einer Membran mit Bajonettanschluss ausgestaltet sein. Somit lassen sich mit nur zwei Ausführungen von Membranhaltern 28, d.h. mit Gewinde oder Bajonett, alle Mediumsmembranen nachträglich koppeln. Eine neue Anschlussart, beispielsweise mit einem metrischen Gewinde, ist jederzeit möglich, da allein der Membranhalter 28 neu gestaltet wird und der Stellantrieb nicht geändert werden muss. Der Stellantrieb kann somit als komplette Einheit unabhängig von der Ausführung des Membranhalters in Serie vormontiert werden, wodurch eine optimierte und kostengünstige Baugruppen-Montage realisierbar ist.

Das Gehäuseoberteil 24 ist mit dem Zwischenstück 18 über entsprechende Gewinde 68, 70 unter Zwischenordnung eines Dichtungsringes 72 verschraubt. Damit die im Gehäuseoberteil 24 integrierten Luftanschlussstutzen 56, 58 nach dem Aufschrauben des Gehäuseoberteils 24 auf das Zwischenstück 18 exakt positioniert sind und die Verbindung zwischen Gehäuseoberteil 24 und Zwischenstück 18 gesichert ist, sind am Gehäuseoberteil 24 und am Zwischenstück 18 Anschlagflächen 74 bzw. 76 vorgesehen, die nach erfolgter Verschraubung aneinander anliegen.

Gemäss Fig. 5 umfasst jede der über 360° umlaufenden Anschlagflächen 74, 76 zwei Teilflächen von je 180°. Beide Anschlagteile weisen zumindest teilweise ein von Null abweichende Steigung auf, so dass die paarweisen Anschlagteilflächen durch stufenförmige Endanschläge 78, 80 begrenzt sind. Die Anschlagflächen 74 am Gehäuseoberteil 24 weisen über ihre gesamte Länge eine Steigung auf, die der Steigung der Gewinde 68, 70 des Zwischenstücks 18 bzw. des Gehäuseoberteils 24 entspricht. Die beiden Anschlagflächen 76 am Zwischenstück 18 weisen in einem Bereich 76a, der sich über 135° erstreckt, die oben erwähnte Steigung auf. In einem an den ersten Bereich 76a anschliessenden zweiten Bereich 76b von 45° beträgt die Steigung der Anschlagfläche Null.

Die Wirkung dieser Teilbereiche 76b mit der Steigung Null ergibt sich aus der Betrachtung von Fig. 6. In der Endphase der Verschraubung des Gehäuseoberteils 24 mit dem Zwischenstück 18 gleitet ein Teil der Anschlagfläche 74 des Gehäuseoberteils 24 auf dem Bereich 76a des Zwischenstücks 18. Durch die Verringerung der Steigung des Bereichs 76b gegenüber dem Bereich 76a ergibt sich beim Weiterdrehen eine kontinuierlich höher werdende Vorspannung im Gewinde 68, 70, die beim Zusammentreffen der beiden stufenförmigen Endanschläge 78, 80 ihren vorbestimmten Wert aufweist und dadurch ein unbeabsichtigtes oder selbsttätiges Lösen der beiden verschraubte Teile verhindert.

Das Membranventil 10 ist so konzipiert, dass die Gehäuseteile 12, 24, das Zwischenstück 18, der Kolben 32 sowie das Druckstück 30 aus Kunststoff hergestellt werden können.

## Patentansprüche

1. Pneumatisch oder hydraulisch angetriebenes Membranventil mit einem über eine Druckspindel (26) betätigbaren Druckstück (30), einer mit dem Druckstück zusammenwirkenden Membran (22) und einem am Druckrtück (30) anliegenden Membranhalter (28), **dadurch gekennzeichnet, daß**, die Membran (22) über eine das Druckstück (30) durchsetzende, lösbare Verbindung am Membranhalter (28) festgelegt ist, und dass die Druckspindel (26) mit dem als Kupplungsstück ausgestaltenen Membranhalter (28) über einer lösbare Nut/Feder-Verbindung (62,64) kuppelbar ist, so dass der Membranhalter (28), mit zusammengebautem Stellantrieb, unabhängig von der Position der Druckspindel (26), einbaubar beziehungsweise austauschbar ist.

2. Membranventil nach Anspruch 1, **dadurch gekennzeichnet, dass** die Nut/Feder-Verbindung durch eine stirnseitig an der Druckspindel (26) angeordnete Feder in der Form eines Ringrandes (62) und eine den Ringrand teilweise aufnehmende, ringförmige Nut (64) am Membranhalter (28) gebildet ist.

3. Membranventil nach Anspruch 2, **dadurch gekennzeichnet, dass** der Ringrand (62) durch eine am stirnseitigen Ende der Druckspindel (26) radial umlaufende Nut (60) gebildet ist.

4. Membranventil nach einem der Ansprüche 1 bis 3, **dadurch gekennzeichnet, dass** eine am Membranhalter (28) vorgesehene Ausnehmung (66) so ausgestaltet ist, dass die zur Kupplung der Druckspindel (26) mit dem Membranhalter (28) erforderliche Nut/Feder-Verbindung (62,64) auch bei im Zwischenstück (18) eingelegtem Membranhalter (28) herstellbar ist.

5. Membranventil nach einem der Ansprüche 1 bis 4, **dadurch gekennzeichnet, dass** beim Wechsel von EPDM auf PTFE-Membran (22) nur der Membranhalter (28) ausgetauscht werden muss.

6. Membranventil nach einem der Ansprüche 1 bis 5, **dadurch gekennzeichnet, dass** die Druckspindel (26) als einfaches Drehteil konzipiert ist.

7. Membranventil nach Anspruch 1, **dadurch gekennzeichnet, dass** der Membranhalter (28) als 6-kant-förmiges Teil ausgebildet ist und in Kombination mit dem Druckstück (30) die Verbindung zwischen Membranhalter (28) und der Membran (22) sicherstellt.

8. Membranventil nach einem der Ansprüche 1 bis 7, **dadurch gekennzeichnet, dass** die Abmessungen des Membranhalters (28) derart wählbar sind, dass infolge geringerer Flächenpressung der Einsatz eines Druckstückes (30) aus Kunststoff möglich ist.

9. Membranventil nach einem der Ansprüche 1 bis 8, mit einem Gehäuseoberteil (24), einem Zwischenstück (18) und einem als Strömungskörper ausgestalteten Gehäuseunterteil (12), wobei das Gehäuseoberteil (24) mit dem Zwischenstück (18) über ein Gewinde (68,70) verschraubt ist, **dadurch gekennzeichnet, dass** das Gehäuseoberteil (24) und das Zwischenstück (18) zur Erzeugung einer Vorspannung des Gewindes (68,70) umlaufende, im verschraubten Zustand einander anliegende Anschlagflächen (74,76) mit teilweise voneinander verschiedenen Steigungen aufweisen, wobei die Schraubbewegung durch einen durch die Anschlagflächen (74,76) gebildeten, stufenförmigen Endanschlag (78,80) begrenzt ist.

10. Membranventil nach Anspruch 9, **dadurch gekennzeichnet, dass** jede der Anschlagflächen (74,76) paarweise ausgebildet und unter Bildung von je zwei Endanschlägen (78,80) gegeneinander um 180° versetzt angeordnet sind.

11. Membranventil nach Anspruch 9 oder 10, **dadurch gekennzeichnet, dass** eine der Anschlagflächen (74,76), vorzugsweise die Anschlagfläche (76) des Zwischenstücks (18), zwei Teilbereiche (76a,b) mit voneinander unterschiedlichen Steigungen aufweist, wobei der zweite Teilbereich (76b) zur Erzeugung einer definierten Gewindevorspannung eine gegenüber dem ersten Teilbereich (76a) geringere Steigung, vorzugsweise eine Steigung mit dem Wert Null, aufweist.

12. Membranventil nach Anspruch 10 und 11, **dadurch gekennzeichnet, dass** der erste Teilbereich (76a) der Anschlagfläche (76) sich über etwa 135° und der zweite Teilbereich (76b) über etwa 45° erstreckt.

## Claims

1. Pneumatically or hydraulically driven diaphragm valve, with a pressure piece (30) actuable via a pressure spindle (26), with a diaphragm (22) cooperating with the pressure piece and with a diaphragm holder (28) bearing against the pressure piece (30), **characterized in that** the diaphragm (22) is fixed to the diaphragm holder (28) via a releasable connection passing through the pressure piece (30), and **in that** the pressure spindle (26) is capable of being coupled via a releasable tongue-and-groove connection (62, 64) to the diaphragm holder (28) designed as a coupling piece, so that, with the actuating drive assembled, the diaphragm holder (28) can be installed or exchanged, irrespective of the position of the pressure spindle (26).

2. Diaphragm valve according to Claim 1, **characterized in that** the tongue-and-groove connection is formed by a tongue arranged on the end face of the pressure spindle (26) and taken the form of an annular edge (62) and by an annular groove (64) located on the diaphragm holder (28) and partially receiving the annular edge.

3. Diaphragm valve according to Claim 2, **characterized in that** the annular edge (62) is formed by a groove (60) running radially around on the end face of the pressure spindle (26).

4. Diaphragm valve according to one of Claims 1 to 3, **characterized in that** a recess (66) provided on the diaphragm holder (28) is designed in such a way that the tongue-and-groove connection (62, 64) necessary for coupling the pressure spindle (26) to the diaphragm holder (28) is capable of being made even with the diaphragm holder (28) inserted in the intermediate piece (18).

5. Diaphragm valve according to one of Claims 1 to 4, **characterized in that**, during the change from an EPDM to a PTFE diaphragm (22), only the diaphragm holder (28) has to be exchanged.

6. Diaphragm valve according to one of Claims 1 to 5, **characterized in that** the pressure spindle (26) is designed as a simple lathe-turned part.

7. Diaphragm valve according to Claim 1, **characterized in that** the diaphragm holder (28) is designed as a hexagonal part and, in combination with the pressure piece (30), ensures the connection between the diaphragm holder (28) and the diaphragm (22).

8. Diaphragm valve according to one of Claims 1 to 7, **characterized in that** the dimensions of the diaphragm holder (28) can be selected in such a way that the use of a pressure piece (30) made of plastic is possible as a result of relatively low surface pressure.

9. Diaphragm valve according to one of Claims 1 to 8, with a housing upper part (24), with an intermediate piece (18) and with a housing lower part (12) designed as a flow body, the housing upper part (24) being screwed to the intermediate piece (18) via a thread (68, 70), **characterized in that** the housing upper part (24) and intermediate piece (18) have, in order to generate a prestress of the thread (68, 70), continuous stop faces (74, 76) which, in a screwed-together state, bear against one another and have pitches partially differing from one another, the screwing movement being limited by a step-shaped limit stop (78, 80) formed by the stop faces (74, 76).

10. Diaphragm valve according to Claim 9, **characterized in that** the stop faces (74, 76) are produced in each case in pairs and are arranged, offset relative to one another at 180°, so as to form in each case two limit stops (78, 80).

11. Diaphragm valve according to Claim 9 or 10, **characterized in that** one of the stop faces (74, 76), preferably the stop face (76) of the intermediate piece (18), has two part-regions (76a,b) with pitches different from one another, the second part-region (76b) having, in order to generate a defined thread prestress, a pitch lower than that of the first part-region (76a), preferably a pitch having the value zero.

12. Diaphragm valve according to Claims 10 and 11, **characterized in that** the first part-region (76a) of the stop face (76) extends over about 135° and the second part-region (76b) over about 45°.

## Revendications

1. Soupape à membrane à commande pneumatique ou hydraulique avec une pièce de pression (30) actionnable par une tige de pression (26), une membrane (22) coopérant avec la pièce de pression et un porte-membrane (28) appliqué sur la pièce de pression (30), **caractérisée en ce que** la membrane (22) est attachée au porte-membrane (28) par un assemblage démontable traversant la pièce de pression (30), et **en ce que** la tige de pression (26) peut être couplée au porte-membrane (28) ayant la forme d'une pièce de couplage par un assemblage démontable à rainure/ressort (62, 64), de telle manière que le porte-membrane (28), avec un servomoteur incorporé, puisse être monté, respectivement échangé, indépendamment de la position de la tige de pression (26).

2. Soupape à membrane suivant la revendication 1, **caractérisée en ce que** l'assemblage rainure/ressort est formé par un ressort ayant la forme d'un bord annulaire (62) disposé à l'extrémité de la tige de pression (26) et une rainure annulaire (64) sur le porte-membrane (28) recevant partiellement le bord annulaire.

3. Soupape à membrane suivant la revendication 2, **caractérisée en ce que** le bord annulaire (62) est formé par une rainure radialement périphérique (60) sur l'extrémité frontale de la tige de pression (26).

4. Soupape à membrane suivant l'une quelconque des revendications 1 à 3, **caractérisée en ce qu'**un évidement (66) prévu sur le porte-membrane (28) est configuré de telle manière que l'assemblage de rainure/ressort (62, 64) nécessaire pour le couplage de la tige de pression (26) avec le porte-membrane (28) puisse également être réalisé avec le porte-membrane (28) inséré dans la partie intermédiaire (18).

5. Soupape à membrane suivant l'une quelconque des revendications 1 à 4, **caractérisée en ce que** seul le porte-membrane (28) doit être échangé lors du changement d'une membrane (22) en EPDM pour une membrane (22) en PTFE.

6. Soupape à membrane suivant l'une quelconque des revendications 1 à 5, **caractérisée en ce que** la tige de pression (26) est conçue comme une pièce tournée simple.

7. Soupape à membrane suivant la revendication 1, **caractérisée en ce que** le porte-membrane (28) est constitué par une pièce à six pans et assure, en combinaison avec la pièce de pression (30), l'assemblage entre le porte-membrane (28) et la membrane (22).

8. Soupape à membrane suivant l'une quelconque des revendications 1 à 7, **caractérisée en ce que** les dimensions du porte-membrane (28) peuvent être choisies de telle manière que l'on puisse employer une pièce de pression (30) en matière plastique en raison de la faible pression superficielle.

9. Soupape à membrane suivant l'une quelconque des revendications 1 à 8, avec une partie supérieure de boîtier (24), une partie intermédiaire (18) et une partie inférieure de boîtier (12) ayant la forme d'un corps d'écoulement, la partie supérieure de boîtier (24) étant assemblée par vissage à la partie intermédiaire (18) par un filet (68, 70), **caractérisée en ce que** la partie supérieure de boîtier (24) et la partie intermédiaire (18) présentent, pour assurer un préserrage du filet (68, 70), des faces de butée périphériques (74, 76), avec des inclinaisons partiellement différentes l'une de l'autre, s'appliquant l'une sur l'autre à l'état vissé, le mouvement de vissage étant limité par une butée terminale (78, 80) en forme de seuil formée par les faces de butée (74, 76).

10. Soupape à membrane suivant la revendication 9, **caractérisée en ce que** chacune des faces de butée (74, 76) sont configurées par paires et sont disposées avec un décalage de 180° l'une par rapport à l'autre en formant chacune deux butées terminales (78, 80).

11. Soupape à membrane suivant la revendication 9 ou 10, **caractérisée en ce qu'**une des faces de butée (74, 76), de préférence la face de butée (76) de la partie intermédiaire (18), présente deux zones partielles (76a, b) avec des inclinaisons différentes l'une de l'autre, la seconde zone partielle (76b) présentant une inclinaison moindre que la première zone partielle (76a), de préférence une inclinaison de valeur nulle, pour assurer un préserrage déterminé du filet.

12. Soupape à membrane suivant la revendication 10 ou 11, **caractérisée en ce que** la première zone partielle (76a) de la face de butée (76) s'étend sur environ 135° et la seconde zone partielle (76b) sur environ 45°.
